# EUROPEAN PATENT SPECIFICATION

(11) **EP 2 413 754 B1**
(45) Date of publication and mention of the grant of the patent: **30.01.2013**
(21) Application number: 10717747.9
(22) Date of filing: 31.03.2010
(51) Int. Cl.: A47J 31/44, A47J 31/36

(54) **BEVERAGE-MAKING PERCOLATOR ASSEMBLY**
FILTERANORDNUNG ZUR ZUBEREITUNG VON GETRÄNKEN
ENSEMBLE PERCOLATEUR POUR CONFECTION DE BOISSONS

(30) Priority: 01.04.2009 IT TO20090252
(43) Date of publication of application: 08.02.2012
(73) Proprietor: SGL Italia S.r.l. con unico socio, 10156 Torino (TO) (IT)
(72) Inventor: SANGIUOLO, Lorenzo, 14055 Costigliole d'Asti (IT)
(74) Representative: Jorio, Paolo
(86) International application number: PCT/IB2010/000723
(87) International publication number: WO 2010/113019

(56) References cited:
- EP-A- 1 559 352
- EP-A- 2 036 468
- WO-A-00/49926
- CA-A1- 2 557 883
- US-A1- 2003 071 056

## Description

### TECHNICAL FIELD

The present invention relates to a beverage-making percolator assembly.

### BACKGROUND ART

More specifically, the present invention relates to a percolator assembly for making a beverage from a measure of powdered anhydrous material in a container, and of the type comprising a frame; dispensing means for dispensing pressurized hot water; a seat for receiving said container and movable, with respect to the frame, in a horizontal first direction and along a path between a loading position to load the container, and a percolating position, in which the seat faces the dispensing means; and unloading means for removing the used container from the seat as the seat is moved from the percolating position to the loading position; the unloading means comprising a fixed opposing member fitted to the frame, over said path.

A percolator assembly of this type is described, for example, in WO 00/49926.

### DISCLOSURE OF INVENTION

It is an object of the present invention to provide a percolator assembly of the type described above, designed to permit automatic unloading of the used container in a straightforward, low-cost manner.

According to the present invention, there is provided a beverage-making percolator assembly as claimed in Claim 1 and preferably in any one of the following Claims depending directly or indirectly on Claim 1.

### BRIEF DESCRIPTION OF THE DRAWINGS

A non-limiting embodiment of the invention will be described by way of example with reference to the accompanying drawings, in which:
Figure 1 shows a view in perspective of a preferred embodiment of the percolator assembly according to the present invention;
Figures 2 to 5 show larger-scale axial sections of the Figure 1 assembly in different operating positions;
Figure 6 shows a larger-scale view of a detail in Figures 2 to 5.

### BEST MODE FOR CARRYING OUT THE INVENTION

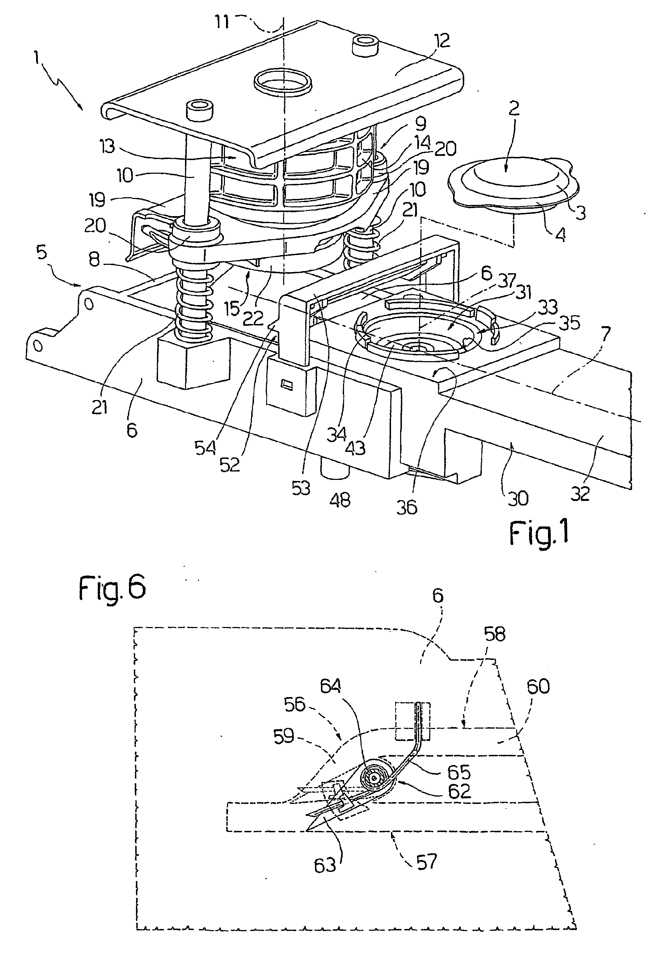

Number 1 in Figure 1 indicates as a whole a percolator assembly for making a beverage from a measure of powdered anhydrous material in a container 2, which, in the example shown, is defined by a known wafer of filter paper comprising an ellipsoidal body 3, and an annular outer flange 4 projecting radially from body 3.

Assembly 1 comprises a frame 5, in turn comprising two walls 6, which extend parallel to and on opposite sides of a horizontal axis 7, and are connected to each other, at respective axial ends, by a transverse wall 8. Over walls 6, frame 5 comprises a gantry structure, which supports a pressurized-hot-water dispensing assembly 9, and comprises two posts 10, each of which is fitted to a respective wall 6, close to transverse wall 8, and extends upwards, parallel to the other post 10 and to a vertical axis 11 perpendicular to axis 7. Posts 10 are connected to each other at their respective free ends by a horizontal plate 12 crosswise to axis 11.

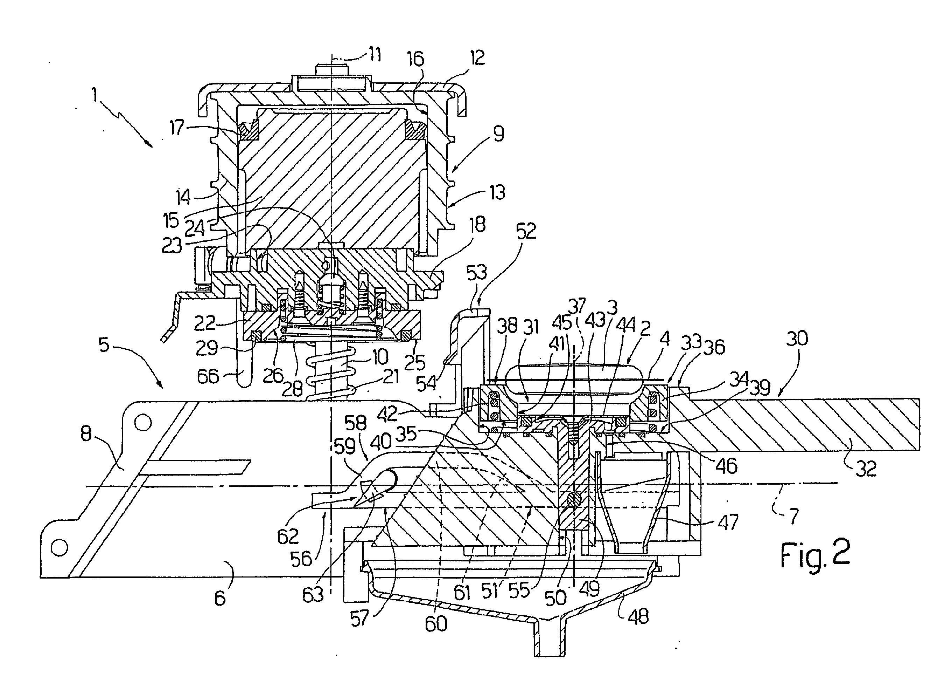

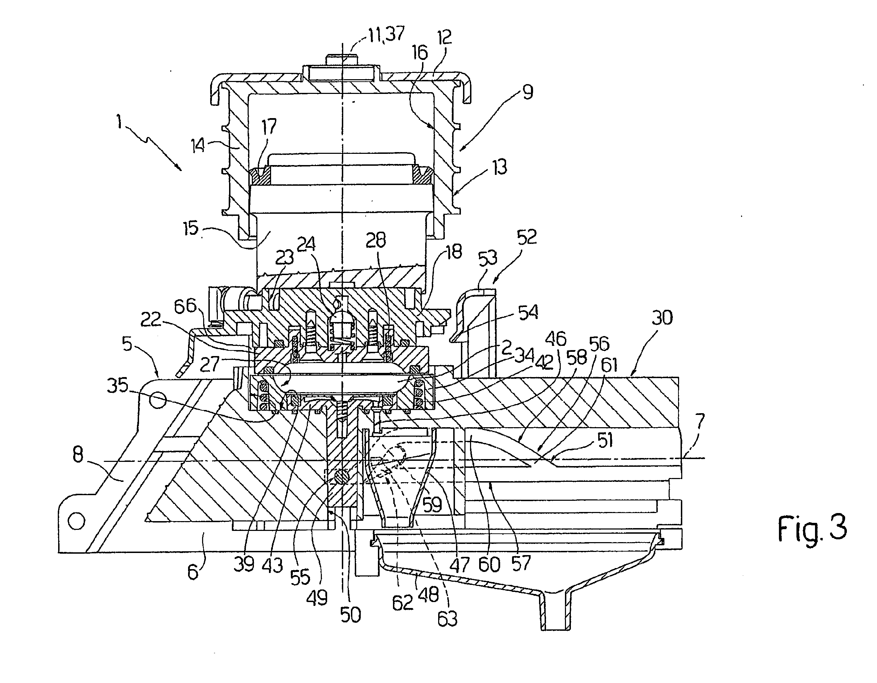

As shown in Figures 1 and 2, dispensing assembly 9 comprises a hydraulic cylinder 13, in turn comprising a cylinder 14 connected rigidly to plate 12 and coaxial with axis 11; and a piston 15, which is mounted to slide axially, along axis 11 and inside cylinder 14, between a withdrawn rest position (Figure 2) and an extracted work position (Figure 3). Close to its axial end facing a top wall of cylinder 14, piston 15 has an annular end flange extending radially from piston 15 to cylinder 14, and defining, between piston 15 and the top wall of cylinder 14, a variable-volume chamber 16, which is sealed in fluidtight manner by a sealing ring 17 fitted to the end of piston 15, and is designed, in use, to receive pressurized water from a feed line (not shown).

At the opposite axial end, piston 15 has an end portion 18 projecting axially from cylinder 14 and having two appendixes 19, which are crosswise to axis 11, project outwards in diametrically opposite directions with respect to axis 11, and each have a through hole engaged in sliding manner by a respective post 10, with the interposition of a bushing 20 integral with respective appendix 19, to define, together with the other appendix 19, a device for angularly locking and axially guiding piston 15 with respect to cylinder 14.

A return spring 21 is coiled about each post 10, in the space between relative appendix 19 and relative wall 6, and serves, together with the other spring 21, to keep piston 15 normally in the withdrawn position.

A sprinkler 22 is fitted rigidly by screws to the free end of end portion 18 and, in use, is supplied with pressurized hot water from a boiler (not shown) by a conduit 23 formed in end portion 18 and communicating with sprinkler 22 via a one-way valve 24 calibrated to open, in use, when conduit 23 reaches a given pressure.

Sprinkler 22 is substantially cup-shaped, is bounded axially by a flat surface 25 crosswise to axis 11, and has a semi-ellipsoidal central cavity 26, which is coaxial with axis 11, is roughly as deep as half the thickness of container 2, and, as explained below, defines the top half-chamber of an infusion chamber 27 for housing a container 2 for infusion. A top surface of cavity 26 has an annular groove coaxial with axis 11 and defining a seat for a coil spring 28, which serves, in use, to assist detachment of the wet container 2 from cavity 26 at the end of the percolating stage.

An annular groove is formed in surface 25, surrounds the periphery of cavity 26, is coaxial with axis 11, and houses a sealing ring 29 for sealing infusion chamber 27.

Assembly 1 also comprises a drawer 30, which has a seat 31 for receiving a container 2 and defining a bottom half-chamber of infusion chamber 27, and is mounted between walls 6 to slide along axis 7 and move seat 31 between an extracted position (Figure 2) to load container 2, and a withdrawn percolating position (Figure 3), in which seat 31 faces and is aligned with sprinkler 22 along axis 11, and cooperates in fluidtight manner with sprinkler 22 to define infusion chamber 27.

More specifically, as shown in Figures 2 to 5, drawer 30 is divided into a front portion facing the user and defining a handle 32 by which to operate drawer 30; and a rear portion containing seat 31 and engaging a straight guide (not shown) formed in walls 6 to guide drawer 30 along axis 7.

Seat 31 is defined by a cup-shaped body 33 comprising an annular body 34, which is housed loosely inside a cylindrical cavity 35 formed in a top surface 36 of drawer 30 and coaxial with an axis 37 perpendicular to axis 7 and parallel to axis 11.

Annular body 34 comprises a cylindrical lateral wall, which is lower than the depth of cavity 35, and is bounded internally by a semi-ellipsoidal surface, and at the top by a flat top surface 38 crosswise to axis 37; and a bottom wall, which is bounded, on the side facing a bottom surface 39 of cavity 35, by a bottom surface 40 crosswise to axis 37 and having a centre through hole 41 coaxial with axis 37 and engaged in transversely sliding manner by a bottom wall 43 which, together with annular body 34, defines seat 31. Bottom surface 40 of annular body 34 has an annular groove defining a seat for a coil spring 42, which extends between annular body 34 and bottom surface 39 of cavity 35, so as to normally keep annular body 34 (Figures 2, 4, 5) raised with respect to cavity 35, with top surface 38 just slightly above surface 36.

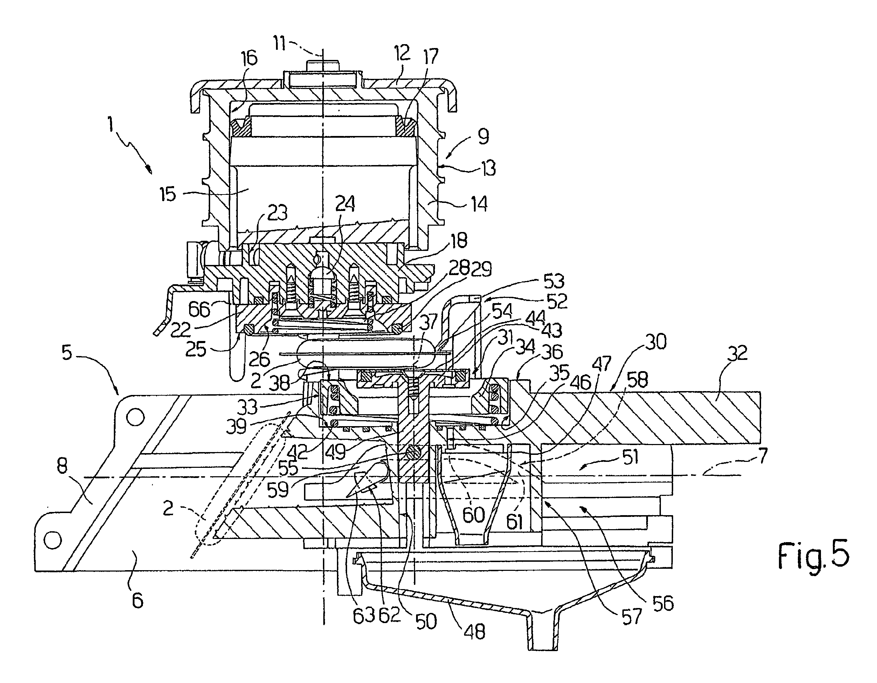

Bottom wall 43 is the same thickness as the bottom wall of annular body 34, has a diameter approximately equal to but no larger than the diameter of hole 41, and is movable, as described below, along axis 37 and through hole 41 and annular body 34, between a lowered position (Figure 2), in which bottom wall 43 contacts bottom wall 39 of cavity 35 to close hole 41, and a raised position (Figure 5), in which bottom wall 43 is positioned at least partly outside annular body 34 and above top wall 38.

On the side facing the centre of seat 31, bottom wall 43 has an annular cavity, which is coaxial with axis 37, is closed at the top by a filter plate 44 fixed to bottom wall 43 by a screw, and defines a chamber 45 for the beverage percolated from container 2.

Chamber 45 opens outwards along a drain conduit 46, which comprises a first portion formed in bottom wall 43; and a second portion formed in drawer 30 and communicating at one end with the first portion when wall 43 is in the lowered position (Figures 2-4), and at the other end with a tubular conduit 47, which is integral with drawer 30 and communicates, regardless of the position of drawer 30, with the inlet of a drain funnel 48 integral with frame 5.

Bottom wall 43 is fitted rigidly with a cylindrical appendix 49, which is coaxial with axis 37, engages a cylindrical hole 50 formed in bottom surface 39 of cavity 35, and serves to guide bottom wall 43 to and from the lowered position along axis 37.

This movement of bottom wall 43 is controlled, in use, by the movement of drawer 30 along axis 7, and by means of a guide device 51, which forms part of assembly 1 and is designed to keep bottom wall 43 in the lowered position (Figure 2) as drawer 30 is pushed from the loading position (Figure 2) to the percolating position (Figure 3), and to move bottom wall 43 into the raised position (Figure 5) as drawer 30 is moved from the percolating position to the loading position. More specifically, guide device 51 is designed to raise and keep bottom wall 43 raised throughout the time it takes for seat 31 to move, from the percolating position, through an unloading position to unload the used container 2 from seat 31 at the end of the percolating stage.

Accordingly, as shown in Figures 1 and 2, assembly 1 comprises an unloading device 52 integral with frame 5 and defined by an opposing member fixed between the percolating and loading positions of seat 31. Unloading device 52 comprises two uprights, each integral with a respective wall 6; and a crosspiece 53, which connects the two uprights, has an L-shaped cross section, and comprises a horizontal top wall, and a lateral wall facing dispensing assembly 9 and bounded at the bottom by a free edge 54. Edge 54 is angled roughly 45° with respect to the lateral wall and towards dispensing assembly 9, extends crosswise to axis 7 from one wall 6 to the other, and is located at such a height, with respect to drawer 30, that, when bottom wall 43 is in the raised position (Figure 5), the distance, measured parallel to axis 11, between bottom wall 43 and edge 54 equals roughly half the thickness of container 2.

As shown in Figures 2 and 6, guide device 51 controlling the movement of bottom wall 43 between the lowered and raised positions is in the form of a cam system comprising a fixed face cam integral with frame 5; and a follower integral with bottom wall 43 and positively engaging the cam. More specifically, the follower is defined by a pin 55, which is integral with and perpendicular to appendix 49, extends from appendix 49 to one of the two walls 6, and engages in transversely sliding manner a track 56 formed in wall 6 and comprising a straight portion 57 parallel to axis 7 and extending along a portion of wall 6 between axis 11 and handle 32; and a curved portion 58 communicating with straight portion 57 and extending over part of straight portion 57.

More specifically, curved portion 58 comprises a portion 59 close to axis 11 and sloping roughly 45° upwards with respect to straight portion 57; a portion 60 parallel to straight portion 57 and extending beneath unloading device 52; and a portion 61 sloping roughly 45° downwards with respect to portion 60. Between portions 59 and 60, track 56 comprises a switch device 62 for diverting the path of pin 55 along track 56, as described below. Switch device 62 comprises a triangular member 63 hinged to rotate, about a pin 64 crosswise to axes 7 and 11 and in opposition to a spring 65, between a normal downward-tilted position (shown by the continuous line in Figure 6), in which member 63 extends across straight portion 57 to connect an initial portion of straight portion 57 to portion 59 of curved portion 58, and a substantially horizontal position (shown by the dash line in Figure 6), in which member 63 extends across the inlet of portion 59 to cut portion 59 off from straight portion 57.

Operation of assembly 1 will now be described, as of the Figure 2 operating configuration, in which drawer 30 is extracted, seat 31 is in the loading position, a container 2 is inserted by the user inside seat 31, pin 55 engages straight portion 57, and bottom wall 43 is therefore in the lowered position. Bottom wall 43 remains in the lowered position even as drawer 30 is closed, on account of the closing movement of the drawer moving pin 55 along straight portion 57.

Once drawer 30 is fully closed and seat 31 in the percolating position, in which axis 37 coincides with axis 11 and pin 55 is located at one end of straight portion 57, hydraulic cylinder 13 is operated to lower piston 15, which, after pressing annular body 34 against bottom surface 39 of cavity 35 by means of sprinkler 22, reaches the extracted position, in which sprinkler 22 is compressed in fluidtight manner against annular body 34 to define, with annular body 34 and bottom wall 43, infusion chamber 27 (Figure 3).

As shown in Figures 2 to 5, assembly 1 comprises a safety device for preventing drawer 30 from being opened once hydraulic cylinder 13 is operated, and which comprises a pin 66 integral with end portion 18 of piston 15 and extending downwards from end portion 18 and parallel to axis 11 to engage a hole (not shown), formed in drawer 30, alongside cavity 35, when piston 15 moves into the extracted position.

At this point, pressurized hot water is fed along conduit 23 and via one-way valve 24 into infusion chamber 27, and the beverage percolated from the anhydrous material in container 2 flows out along drain conduit 46, tubular conduit 47, and funnel 48.

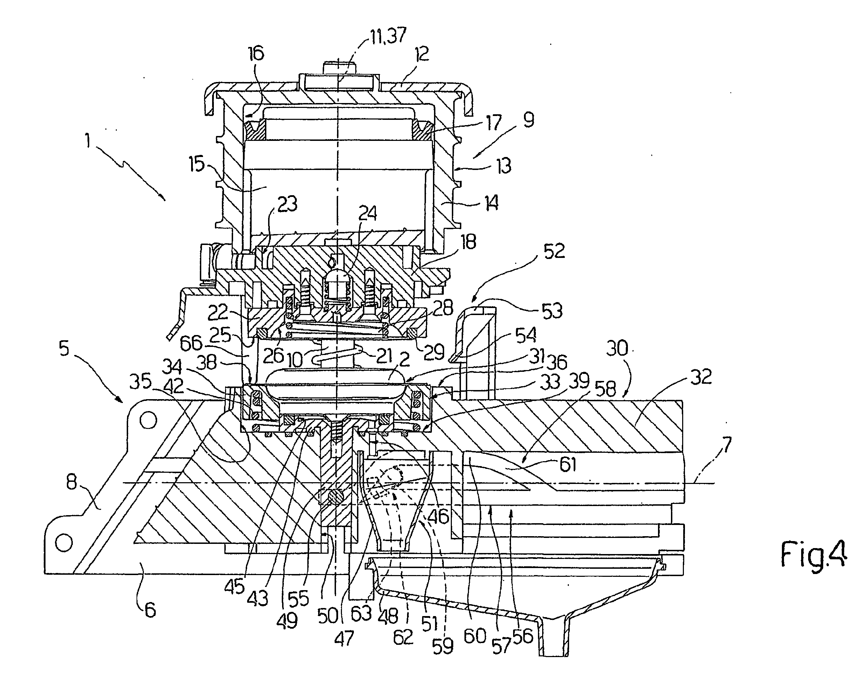

As shown in Figure 4, at the end of the percolating stage, hydraulic cylinder 13 is deactivated, and piston 15 is restored by springs 21 to the withdrawn position, thus opening infusion chamber 27, and spring 42 clicks up annular body 34 together with the used container 2 positioned with flange 4 resting on surface 38.

When drawer 30 is extracted, pin 55, which moves together with drawer 30 along axis 7, is forced by triangular member 63 of guide device 51 to leave straight portion 57 and engage portion 59 of curved portion 58, thus gradually lifting bottom wall 43 and the used container 2.

As shown in Figure 5, as pin 55 travels along portion 60 of curved portion 58, bottom wall 43 is in the fully raised position, in which container 2 is aligned with edge 54 of crosspiece 53. So, as drawer 30 and bottom wall 43 move gradually along axis 7, container 2 is pushed by edge 54 off bottom wall 43 and falls by gravity (as shown by the dash line in Figure 5) behind drawer 30 into a bin (not shown) beneath assembly 1.

Once drawer 30 is fully extracted, seat 31 is once more in the loading position (Figure 2) ready to receive another container 2.

In connection with the above, it should be pointed out that assembly 1 also provides for effectively unloading the used container 2 automatically, even in the event drawer 30 is not opened as soon as the beverage is produced, and the used container 2 remains inside seat 31 for a relatively long time. That is, annular body 34 being mounted inside cavity 35 with the interposition of spring 42, the pop-up movement of annular body 34, when infusion chamber 27 is opened, detaches container 2 from bottom wall 43, thus preventing container 2 from drying to bottom wall 43, so that, when drawer 30 is eventually opened, container 2 is pushed whole off bottom wall 43 by edge 54, as opposed to breaking up and dispersing used powdered material.

## Claims

1. A percolator assembly for making a beverage from a measure of anhydrous powdered material in a container (2), the assembly (1) comprising a frame (5); dispensing means (9) for dispensing pressurized hot water; a seat (31) for receiving said container (2) and movable, with respect to the frame (5) and along a path in a horizontal first direction, between a loading position to load the container (2), and a percolating position, in which the seat (31) faces the dispensing means (9); and unloading means (52) for removing the used container (2) from the seat (31) as the seat (31) is moved from the percolating position to the loading position; the unloading means (52) comprising a fixed opposing member (54) fitted to the frame (5), over said path; and the assembly (1) being **characterized in that** the seat (31) is defined by a cup-shaped body (33), which has an axis (37) extending in a vertical second direction, and comprises a bottom wall (43) substantially crosswise to said axis (37) and movable in the second direction with respect to the frame (5).

2. An assembly as claimed in Claim 1, wherein the opposing member (54) is located between the loading position and the percolating position of the seat (31).

3. An assembly as claimed in Claim 1 or 2, and comprising guide means (51) associated with the bottom wall (43) to move the bottom wall (43) from a lowered position to a raised position as the seat (31) is moved from the percolating position to the loading position.

4. An assembly as claimed in Claim 3, wherein the bottom wall (43), in the raised position, is lower than the opposing member (54), and the distance, measured parallel to the first direction, between the bottom wall (43) and the opposing member (54), is less than the thickness of the container (2).

5. An assembly as claimed in Claim 4, wherein the guide means (51) are cam means, and comprise a pin (55) integral with the bottom wall (43) and acting as a follower; and a fixed face cam engaged in transversely sliding manner by the pin (55).

6. An assembly as claimed in Claim 5, wherein the cam is defined by a track (56) formed in the frame (5) and comprising a straight portion (57) parallel to the first direction and extending from the loading position to the percolating position; and a curved portion (58), which communicates with the straight portion (57), and is located between the opposing member (54) and the straight portion (57), with its concavity facing the straight portion (57); the pin (55) being designed to travel along the straight portion (57) as the seat (31) moves from the loading position to the percolating position, and along the curved position (58) as the seat (31) moves from the percolating position to the loading position.

7. An assembly as claimed in Claim 6, wherein the guide means (51) comprise a switch device (63) located along the track (56), close to the percolating position, to direct the pin (55) onto the curved portion (58) as the seat (31) moves out of the percolating position.

8. An assembly as claimed in any one of the foregoing Claims, and comprising a drawer (30) supporting the seat (31) and fitted to the frame (5) to move, with the seat (31), under the opposing member (54) in said first direction.

9. An assembly as claimed in Claim 8, wherein the drawer (30) has a top surface (36), and a longitudinal axis (7) parallel to said first direction; the cup-shaped body (33) being inserted inside a cylindrical cavity (35) formed in said top surface (36) and coaxial with said axis (37), and comprising a cylindrical annular body (34) which is coaxial with said axis (37), surrounds the bottom wall (43), and defines, with the bottom wall (43), said seat (31).

10. An assembly as claimed in Claim 9, wherein the annular body (34) is mounted to slide axially, inside the cavity (35) and in opposition to elastic means (42), between a normal raised position, in which the annular body (34) is raised with respect to a bottom surface (39) of the cavity (35) and with respect to the bottom wall (43), and a lowered position, in which the annular body (34) contacts said bottom surface (39).

## Patentansprüche

1. Perkolatoranordnung zur Zubereitung eines Getränks aus einer Menge an wasserfreiem Pulvermaterial in einem Behälter (2), wobei die Anordnung (1) aufweist einen Rahmen (5); Ausgabemittel (9) zum Ausgeben von unter Druck stehendem heißen Wasser; einem Sitz (31) zum Aufnehmen des Behälters (2), wobei der Sitz in Bezug auf den Rahmen (5) und entlang einer Bahn in einer horizontalen ersten Richtung zwischen einer Ladeposition, um den Behälter (2) zu laden, und einer Perkolierposition, in der der Sitz (31) dem Ausgabemittel (9) zugewandt ist, beweglich ist; und Entlademittel (52) zum Entfernen des verwendeten Behälters (2) von dem Sitz (31), während der Sitz (31) von der Perkolierposition in die Ladeposition bewegt wird; wobei das Entlademittel (52) ein fixiertes gegenüberliegendes Element (54) aufweist, das über der Bahn an dem Rahmen (5) angebracht ist; und wobei die Anordnung (1) **dadurch gekennzeichnet ist, dass** der Sitz (31) durch einen becherförmigen Korpus (33) festgelegt ist, der eine Achse (37) besitzt, die sich in eine vertikale zweite Richtung erstreckt, und der eine Bodenwand (43) aufweist, die im Wesentlichen kreuzförmig zu der Achse (37) ist und in der zweiten Richtung in Bezug auf den Rahmen (5) beweglich ist.

2. Anordnung nach Anspruch 1, wobei das gegenüberliegende Element (54) sich zwischen der Ladeposition und der Perkolierposition des Sitzes (31) befindet.

3. Anordnung nach Anspruch 1 oder 2, und aufweisend Führungsmittel (51), das der Bodenwand (43) zugeordnet ist, um die Bodenwand (43) von einer abgesenkten Position in eine erhöhte Position zu bewegen, während der Sitz (31) von der Perkolierposition zu der Ladeposition bewegt wird.

4. Anordnung nach Anspruch 3, wobei die Bodenwand (43) in der erhöhten Position niedriger als das gegenüberliegende Element (54) ist, und der Abstand, gemessen parallel zu der ersten Richtung, zwischen der Bodenwand (43) und dem gegenüberliegenden Elemente (54) geringer als die Dicke des Behälters (2) ist.

5. Anordnung nach Anspruch 4, wobei das Führungsmittel (51) ein Nockenmittel ist und einen Stift (55), der integral mit der Bodenwand (43) ausgebildet ist und als Nockenstößel wirkt, und eine fixierte Plankurvenscheibe, die sich auf transversal gleitende Weise im Eingriff mit dem Stift (55) befindet, aufweist.

6. Anordnung nach Anspruch 5, wobei die Nocke durch eine Schiene (56) festgelegt ist, die in dem Rahmen (5) gebildet ist, und einen geraden Abschnitt (57), der parallel zu der ersten Richtung ist und sich von der Ladeposition zu der Perkolierposition erstreckt, und einen gekrümmten Abschnitt (58), der in Verbindung mit dem geraden Abschnitt (57) steht und sich zwischen dem gegenüberliegenden Element (54) und dem geraden Abschnitt (57) befindet, wobei seine Konkavität dem geraden Abschnitt (57) zugewandt ist, aufweist, und wobei der Stift (55) dazu bestimmt ist, sich entlang dem geraden Abschnitt (57) zu bewegen, während der Sitz (31) sich von der Ladeposition zu der Perkolierposition bewegt, und sich entlang dem gekrümmten Abschnitt (58) zu bewegen, während der Sitz (31) sich von der Perkolierposition zu der Ladeposition bewegt.

7. Anordnung nach Anspruch 6, wobei das Führungsmittel (51) eine Schaltvorrichtung (63) aufweist, die sich entlang der Schiene (56) in der Nähe der Perkolierposition befindet, um den Stift (55) auf den gekrümmten Abschnitt (58) zu richten, während der Sitz (31) sich von der Perkolierposition weg bewegt.

8. Anordnung nach einem der vorhergehenden Ansprüche, und aufweisend ein Zugelement (30), das den Sitz (31) trägt und an dem Rahmen (5) angebracht ist, um sich mit dem Sitz (31) unter dem gegenüberliegenden Element (54) in die erste Richtung zu bewegen.

9. Anordnung nach Anspruch 8, wobei das Zugelement (30) eine obere Oberfläche (36) und eine longitudinale Achse (7), die parallel zu der ersten Richtung ist, besitzt, und wobei der becherförmige Korpus (33) in eine zylindrische Kavität (35) eingeführt ist, die in der oberen Oberfläche (36) und koaxial zu der Achse (37) gebildet ist, und wobei der becherförmige Korpus einen zylindrischen ringförmigen Korpus (34) aufweist, der koaxial zu der Achse (37) ist und die Bodenwand (43) umgibt und mit der Bodenwand (43) den Sitz (31) festlegt.

10. Anordnung nach Anspruch 9, wobei der ringförmige Korpus (34) derart befestigt ist, dass er in axialer Richtung innerhalb der Kavität (35) und entgegengesetzt zu einem elastischen Mittel (42) zwischen einer normalen erhöhten Position, in der der ringförmige Korpus (34) in Bezug auf eine Bodenoberfläche (39) der Kavität (35) und in Bezug auf die Bodenwand (43) erhöht ist, und einer abgesenkten Position, in der der ringförmige Korpus (34) in Kontakt mit der Bodenoberfläche (39) steht, gleitet.

## Revendications

1. Ensemble percolateur destiné à fabriquer une boisson à partir d'une dose d'un matériau en poudre anhydre dans un récipient (2), l'ensemble (1) comprenant un châssis (5) ; un moyen de distribution (9) destiné à distribuer de l'eau chaude sous pression ; un siège (31) destiné à recevoir ledit récipient (2) et étant mobile, par rapport au châssis (5) et le long d'un chemin dans une première direction horizontale, entre une position de chargement pour charger le récipient (2), et une position de percolation, où le siège (31) fait face au moyen de distribution (9) ; et un moyen de déchargement (52) destiné à retirer le récipient utilisé (2) du siège (31) lorsque le siège (31) se déplace de la position de percolation vers la position de chargement ; le moyen de déchargement (52) comprenant un élément opposé fixe (54) ajusté au châssis (5), sur ledit chemin ; et l'ensemble (1) étant **caractérisé en ce que** le siège (31) est défini par un corps en forme de coupelle (33), qui présente un axe (37) s'étendant dans une deuxième direction verticale, et comprend une paroi de fond (43) essentiellement transversale audit axe (37) et pouvant se déplacer dans la deuxième direction par rapport au châssis (5).

2. Ensemble selon la revendication 1, dans lequel l'élément opposé (54) est situé entre la position de chargement et la position de percolation du siège (31).

3. Ensemble selon la revendication 1 ou 2, et comprenant un moyen de guidage (51) associé avec la paroi de fond (43) pour déplacer la paroi de fond (43) d'une position abaissée à une position surélevée lorsque le siège (31) se déplace de la position de percolation vers la position de chargement.

4. Ensemble selon la revendication 3, dans lequel la paroi de fond (43), en position surélevée, est moins élevée que l'élément opposé (54), et la distance, mesurée parallèlement à la première direction, entre la paroi de fond (43) et l'élément opposé (54), est inférieure à l'épaisseur du récipient (2).

5. Ensemble selon la revendication 4, dans lequel le moyen de guidage (51) est un moyen de came, et comprend un pivot (55) solidaire de la paroi de fond (43) et agissant en tant que suiveur ; et une came plate fixe en prise de manière transversalement coulissante par le pivot (55).

6. Ensemble selon la revendication 5, dans lequel la came est définie par une piste (56) formée dans le châssis (5) et comprenant une partie droite (57) parallèle à la première direction et s'étendant de la position de chargement vers la position de percolation ; et une partie courbée (58), qui communique avec la partie droite (57), et est située entre l'élément opposé (54) et la partie droite (57), avec sa concavité faisant face à la partie droite (57) ; le pivot (55) étant conçu pour se déplacer le long de la partie droite (57) lorsque le siège (31) se déplace de la position de chargement vers la position de percolation, et le long de la position courbée (58) lorsque le siège (31) se déplace de la position de percolation vers la position de chargement.

7. Ensemble selon la revendication 6, dans lequel le moyen de guidage (51) comprend un dispositif de commutation (63) situé le long de la piste (56), à proximité de la position de percolation, pour diriger le pivot (55) sur la partie courbée (58) lorsque le siège (31) se déplace hors de la position de percolation.

8. Ensemble selon l'une quelconque des revendications précédentes, et comprenant un tiroir (30) supportant le siège (31) et ajusté au châssis (5) pour se déplacer, avec le siège (31), sous l'élément opposé (54) dans ladite première direction.

9. Ensemble selon la revendication 8, dans lequel le tiroir (30) présente une surface supérieure (36), et un axe longitudinal (7) parallèle à ladite première direction ; le corps en forme de coupelle (33) étant inséré à l'intérieur d'une cavité cylindrique (35) formée dans ladite surface supérieure (36) et coaxiale avec ledit axe (37), et comprenant un corps annulaire cylindrique (34) qui est coaxial avec ledit axe (37), entoure la paroi de fond (43), et définit, avec la paroi de fond (43), ledit siège (31).

10. Ensemble selon la revendication 9, dans lequel le corps annulaire (34) est monté pour coulisser de façon axiale, à l'intérieur de la cavité (35) et en opposition à un moyen élastique (42), entre une position surélevée normale, où le corps annulaire (34) est surélevé par rapport à une surface de fond (39) de la cavité (35) et par rapport à la paroi de fond (43), et une position abaissée, où le corps annulaire (34) entre en contact avec ladite surface de fond (39).
